(19) Europäisches Patentamt
European Patent Office
Office européen des brevets

(11) **EP 4 477 995 B1**

(12) **EUROPÄISCHE PATENTSCHRIFT**

(45) Veröffentlichungstag und Bekanntmachung des Hinweises auf die Patenterteilung:
**24.12.2025   Patentblatt 2025/52**

(21) Anmeldenummer: **23179016.3**

(22) Anmeldetag: **13.06.2023**

(51) Internationale Patentklassifikation (IPC):
*G01B 21/04* *(2006.01)*     *G01B 11/00* *(2006.01)*
*G06T 5/50* *(2006.01)*

(52) Gemeinsame Patentklassifikation (CPC):
**G01B 21/045; G01B 11/00;** G01B 2210/54

(54) **VERFAHREN UND VORRICHTUNG ZUR BERÜHRUNGSLOSEN VERMESSUNG VON OBJEKTEN**

METHOD AND DEVICE FOR THE CONTACTLESS MEASUREMENT OF OBJECTS

PROCÉDÉ ET DISPOSITIF DE MESURE SANS CONTACT D'OBJETS

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**18.12.2024   Patentblatt 2024/51**

(73) Patentinhaber: **Carl Zeiss Industrielle Messtechnik GmbH
73447 Oberkochen (DE)**

(72) Erfinder:
• **GÖHNERMEIER, Aksel
73457 Essingen-Lauterburg (DE)**
• **MEVENKAMP, Niklas
07751 Jena (DE)**

(74) Vertreter: **Ostertag & Partner Patentanwälte mbB
Azenbergstraße 35
70174 Stuttgart (DE)**

(56) Entgegenhaltungen:
DE-A1- 102012 106 584     DE-A1- 102015 010 214

**Beschreibung**

HINTERGRUND DER ERFINDUNG

Zur Messung von Formen und Oberflächen von Werkstücken und anderer Objekte werden im Stand der Technik taktile oder optische Sensoren eingesetzt. Solche Messungen finden beispielsweise im Rahmen der Qualitätssicherung oder eines "Reverse Engineering" statt.

Die Sensoren haben meist nur einen kleinen Messbereich, der zur Vermessung größerer Werkstücke nicht ausreicht. Koordinatenmessgeräte enthalten deswegen eine Verfahreinrichtung, mit dem sich die Pose (d.h. die Position und Orientierung) des Sensors relativ zu dem zu vermessenden Werkstück verändern lässt. Vor allem bei kleineren Koordinatenmessgeräten befindet sich das Werkstück häufig auf einem Kreuztisch, der entlang zweier horizontaler Koordinatenachsen x, y mit hoher Genauigkeit verfahren werden kann. Der Sensor ist an einer Pinole befestigt, die mit ähnlich hoher Genauigkeit vertikal (d.h. in z-Richtung) verfahren werden kann. Wenn größere oder besonders schwere Werkstücke vermessen werden sollen, kommen in Portalbauweise ausgeführte Koordinatenmessgeräte zum Einsatz, bei denen das Werkstück ruht und nur der Sensor verfahren wird.

Bei den Sensoren unterscheidet man zwischen optischen und taktilen Sensoren. Während bei taktilen Sensoren die Information über die Lage eines Messpunkts durch Berühren des Messpunkts mit einem Antastelement erzeugt wird, wird bei optischen Sensoren die Information über die Lage des Messpunkts durch Licht erfasst.

Bei den optischen Sensoren wird wiederum zwischen punktweise und flächig messenden Sensoren unterschieden. Flächig messende Sensoren sind in der Regel als Messkamera ausgebildet, die zweidimensionale Bilder von der Oberfläche des zu vermessenden Objekts aufnimmt. Einer der Hauptvorteile einer solchen Messkamera besteht in der hohen Messgeschwindigkeit, da sie - anders als taktile und andere punkweise messende Sensoren - gleichzeitig die Koordinaten an mehreren Messpunkten erfasst. Koordinatenmessgeräte mit optischen Sensoren werden von der Anmelderin z.B. unter der Marke ZEISS O-INSPECT vertrieben und sind in der DE 10 2016 202 928 A1 (entspricht US 2017/0248768 A) beschrieben.

Um Oberflächen zu vermessen, die größer sind als der Bildausschnitt, werden bislang an unterschiedlichen Relativpositionen zwischen Messkamera und Objekt Bilder aufgenommen, deren Bildausschnitte sich leicht überlappen. Die einzelnen Bilder werden anschließend durch sog. "Stiching" aneinandergefügt, um auf diese Weise Messpunkte an allen gewünschten Messpositionen auf der Oberfläche des Objekts zu erhalten.

Obwohl die Messkameras eine hohe Messgeschwindigkeit ermöglichen, erfordert eine so durchgeführte Vermessung einer Oberfläche viel Zeit. Der Grund dafür liegt darin, dass die Messkamera vollkommen zur Ruhe gekommen sein muss, damit das aufgenommene Bild nicht unscharf ist. Zwischen den aufeinander folgenden Aufnahmen zweier Bilder vergeht somit eine Verfahrzeit für die eigentliche Verfahrbewegung sowie eine Abklingzeit, die abgewartet werden muss, bis evtl. Schwingungen vollständig abgeklungen sind. Schnellere Verfahrbewegungen führen zwar zu einer kürzeren Verfahrzeit, verlängern aber aufgrund der höheren Beschleunigungen in der Regel die Abklingzeit.

Algorithmen zur nachträglichen Schärfung von Bildern auf der Grundlage einer mathematischen Entfaltung sind an sich im Stand der Technik bekannt. So beschreibt die GB 9316307 A, ein aufgenommenes Bild in unterschiedliche Bereiche zu unterteilen, denen unterschiedliche Bewegungsvektoren zugeordnet werden. Die Entfaltung wird dann für jeden Bereich separat durchgeführt, wobei bestimmte Bereiche von der Entfaltung ausgeschlossen werden, um Artefakte zu vermeiden.

Die US 2006/0279639 A1 offenbart, wie die Bewegung einer Digitalkamera von einem kamerainternen Sensor erfasst wird. Der daraus abgeleitete Faltungskern wird anschließend zur Entfaltung verwendet.

Die US 2007/0009169 A1 befasst sich mit der Bestimmung des Faltungskerns durch Analyse des aufgenommenen unscharfen Bildes.

Aus der US 2009/0169080 A1 ist bekannt, mehrere Bilder des Objekts aufzunehmen, um daraus Rückschlüsse auf die Relativbewegung und damit den Bewegungsvektor ziehen zu können, der für die Entfaltung benötigt wird.

Den bekannten Verfahren ist jedoch gemein, dass die durch Entfaltung geschärften Bilder Artefakte aufweisen, die zu Messungenauigkeiten führen.

Aus der DE 102012 106 584 B4 ist bekannt, zwei Einzelbilder desselben Objektes mit unterschiedlichen, aber bekannten Parametern des optischen Systems aufzunehmen. Bei den Parametern kann es sich beispielsweise um unterschiedliche Pupillenaberrationen handeln, die durch schnell schaltbare Pupillenfilter eingeführt werden. Alternativ können die Einzelbilder mit unterschiedlichem Defokus aufgenommen werden. Die beiden Bilder werden dabei so schnell hintereinander aufgenommen, dass die Lage des Objekts relativ zur Kamera als konstant angenommen werden kann. Mit den beiden Einzelbildern ist es möglich, eine Verschiebung von Ortsfrequenzen des Objekts relativ zu Nullstellen der Modulationsübertragungsfunktion (MTF) des optischen Systems zu bewirken. Wird beispielsweise das erste Einzelbild ohne Defokus und das zweite Einzelbild mit Defokus aufgenommen, können aus dem zweiten Einzelbild Informationen gewonnen werden, die aus dem ersten Einzelbild nicht ableitbar waren, weil die Modulationsübertragungsfunktion an den entsprechenden Ortsfrequenzen Nullstellen hatte.

DE102015010214 offenbart ein Verfahren zur optischen Vermessung eines Objekts, bei dem eine Kamera relativ zur Objektoberfläche bewegt wird. Während der Bewegung werden mehrere Bilder aufgenommen, die aufgrund der Relativbewegung Bewegungsunschärfen aufweisen. Diese Unschärfen werden durch Bildverarbeitung kompensiert, insbesondere durch Anwendung eines Entfaltungsverfahrens zur Korrektur der Bewegungsunschärfe.

ZUSAMMENFASSUNG DER ERFINDUNG

Aufgabe der Erfindung ist es, ein Verfahren und eine Vorrichtung zur berührungslosen Vermessung von Objekten mit Hilfe einer Messkamera anzugeben, die kürzere Messzeiten bei gleichbleibend hoher Messgenauigkeit ermöglichen.

Hinsichtlich des Verfahrens wird die Aufgabe gelöst durch ein Verfahren zur berührungslosen Vermessung eines Objekts mit Hilfe einer Messkamera, wobei das Verfahren die folgenden Schritte umfasst:

a) es wird eine ununterbrochene Relativbewegung zwischen der Messkamera und einer Oberfläche des Objekts erzeugt;

b) während der Relativbewegung werden mehrere Bilder der Oberfläche des Objekts aufgenommen, wobei jedes Bild einen anderen Ausschnitt der Oberfläche zeigt;

c) eine durch die Relativbewegung erzeugte Unschärfe der Bilder wird unter Anwendung eines Entfaltungsalgorithmus herausgerechnet, wobei unterschiedliche Faltungskerne verwendet werden, die sich in wenigstens einer Nullstelle voneinander unterscheiden.

Die Erfinder haben erkannt, dass man die Messzeit erheblich verkürzen kann, wenn man die Bilder während der Relativbewegung aufnimmt. Die Bilder sind dann zwar aufgrund der Relativbewegung unscharf (in der Fotografie würde man sagen "verwackelt"). Durch eine Entfaltung lässt sich Unschärfe der Bilder aber herausrechnen.

Die Erfinder haben außerdem erkannt, dass sich die bei den bekannten Entfaltungsverfahren auftretenden Artefakte vermeiden lassen, wenn bei der Entfaltung unterschiedliche Faltungskerne verwendet werden, die sich in wenigstens einer Nullstelle voneinander unterscheiden.

Bei einer ersten Variante werden von jedem Ausschnitt der Oberfläche mindestens zwei Bilder aufgenommen. Zwischen den Aufnahmen der mindestens zwei Bilder wird mindestens ein Aufnahmeparameter so verändert, dass sich die Faltungskerne bei den mindesten zwei Aufnahmen in wenigstens einer Nullstelle voneinander unterscheiden und sich die Punktspreizfunktion nicht-linear verändert. Dies entspricht im Wesentlichen dem Vorgehen, das in der oben erwähnten DE 10 2012 106 584 B4 vorgeschlagen wird.

Bei einer zweiten Variante wird von jedem Ausschnitt der Oberfläche genau ein Bild aufgenommen. Während der Aufnahme des genau einen Bildes wird mindestens ein Aufnahmeparameter so verändert, dass sich der Faltungskern während der Aufnahme in wenigstens einer Nullstelle verändert und sich die Punktspreizfunktion nicht-linear verändert. Diese Variante hat den Vorteil, dass die Messkamera über keine Einrichtungen verfügen muss, mit denen sich ein Aufnahmeparameter sehr schnell verändern lässt, z.B. schnell schaltbare Pupillenfilter oder mechanisch verschiebbare Bildsensoren.

Bei dem mindestens einen Aufnahmeparameter kann es sich z.B. um eine Geschwindigkeit der Relativbewegung, eine Richtung der Relativbewegung, eine Belichtungszeit oder um eine Intensität der Beleuchtung handeln.

Wenn es sich bei dem Aufnahmeparameter um die Geschwindigkeit oder Richtung der Bewegung handelt, reichen lineare Bewegungen mit verschiedenen, aber während der Aufnahme konstanten Richtungen und/oder Geschwindigkeiten aus. Eine nichtlineare Bewegung stellt jedoch einen zusätzlichen Freiheitsgrad zur Verfügung, der bei der Optimierung der Nullstellenmengen genutzt werden kann.

Bei beiden Varianten wird der mindestens eine Aufnahmeparameter so verändert, dass sich die Punktspreizfunktion nicht-linear verändert. Würde man beispielsweise bei der ersten Variante zwei Bilder mit unterschiedlicher, aber während der jeweiligen Aufnahme zeitlich konstanter Belichtungsintensität aufnehmen, so würden sich die resultierenden Nullstellenmengen der Punktspreizfunktion-Spektren lediglich um einen skalaren Faktor voneinander unterscheiden. Damit lassen sich keine zusätzlichen Informationen gewinnen, mit denen sich Artefakte verhindern lassen. Wenn bei der zweiten Variante z.B. die Beleuchtungsintensität während der Aufnahme des Bildes geändert wird, hat dies automatisch einen nicht-linearen Einfluss auf die Punktspreizfunktion.

Um festzulegen, welcher Aufnahmeparameter wie verändert wird, kann eine Meritfunktion definiert werden, deren Wert mit Hilfe eines Optimierungsalgorithmus optimiert wird. Die Meritfunktion ist dabei vorzugsweise proportional zu einer Summe aus normierten Fourierspektren der Punktspreizfunktion, die von mehreren Aufnahmeparametern abhängt.

Gegenstand der Erfindung ist ferner eine Vorrichtung zur berührungslosen Vermessung eines Objekts, die eine Verfahreinrichtung, eine Messkamera und eine Steuereinrichtung aufweist, die dazu eingerichtet ist, die Verfahreinrichtung so zu steuern, dass die Messkamera in einer ununterbrochenen Relativbewegung relativ zu einer Oberfläche des Objekts bewegt wird, wobei die Messkamera während der Relativbewegung mehrere Bilder von der Oberfläche des Objekts aufnimmt, die jeweils einen anderen Ausschnitt der Oberfläche zeigen. Die Vorrichtung umfasst außerdem eine Auswerteeinrichtung, die dazu eingerichtet ist, eine durch die Relativbewegung erzeugte Unschärfe der Bilder unter Anwendung eines Entfaltungsalgorithmus herauszurechnen, wobei unterschiedliche Faltungskerne verwendet werden, die sich in wenigstens einer Nullstelle voneinander unterscheiden.

Bei einer ersten Variante ist die Steuereinrichtung dazu eingerichtet, von jedem Ausschnitt der Oberfläche mindestens zwei Bilder aufzunehmen, wobei zwischen den Aufnahmen der mindestens zwei Bilder mindestens ein Aufnahmeparameter so verändert wird, dass sich die Faltungskerne bei den mindesten zwei Aufnahmen in wenigstens einer Nullstelle voneinander unterscheiden.

Bei einer zweiten Variante ist Steuereinrichtung dazu eingerichtet, von jedem Ausschnitt der Oberfläche genau ein Bild aufzunehmen, wobei während der Aufnahme des genau einen Bildes mindestens ein Aufnahmeparameter so verändert wird, dass sich der Faltungskern während der Aufnahme in wenigstens einer Nullstelle verändert.

KURZE BESCHREIBUNG DER ZEICHNUNGEN

Nachfolgend werden Ausführungsbeispiele der Erfindung anhand der Zeichnungen näher erläutert. In diesen zeigen:

| | |
|---|---|
| Figur 1a | ein Beispiel für eine Punktspreizfunktion $p_s$ eines Kamerasystems; |
| Figur 1b | ein Beispiel für eine Punktspreizfunktion $p_m$ einer vertikalen linearen Kamerabewegung; |
| Figur 1c | ein Beispiel für den sich aus der Faltung der in den Figuren 1a und 1b ergebenden Faltungskern p, |
| Figur 2 | das logarithmische Spektrum der Punktspreizfunktion p aus der Figur 1c; |
| Figur 3a | ein beispielhaftes Objekt; |
| Figur 3b | das Bild des in der Figur 3a gezeigten Objekts mit Bewegungsunschärfe; |
| Figur 3c | das durch eine direkte Entfaltung erhaltene Bild des in der Figur 3a gezeigten Objekts nach dem Stand der Technik; |
| Figur 4 | das durch zusätzliche Regularisierung erhaltene Bild des in der Figur 3a gezeigten Objekts nach dem Stand der Technik; |
| Figur 5 | ein Koordinatenmessgerät in Kreuztischbauweise mit einer erfindungsgemäßen Messkamera; |
| Figuren 6a und 6b | perspektivische Ansichten eines zu vermessenden Werkstücks zu unterschiedlichen Zeiten eines Messvorgangs; |
| Figur 7 | ein durch die erfindungsgemäße Entfaltung erhaltenes und weitgehend artefaktfreies Bild. |

BESCHREIBUNG BEVORZUGTER AUSFÜHRUNGSBEISPIELE

1. Einführung und technischer Hintergrund

In erster Näherung kann das von einer Messkamera erfasste Bild als Faltung einer Punktspreizfunktion (PSF) und dem Objekt beschrieben werden:

$$I = p * o \qquad\qquad (1)$$

Hierbei bezeichnet der Operator * die Faltungsoperation, die - vereinfacht gesagt - jedem Pixel in einem Bild $I$ (also einer zweidimensionalen Intensitätsverteilung) die gewichtete Summe einer Umgebung in o zuweist, wobei die Gewichte durch die Punktspreizfunktion (PSF) p gegeben sind. Die Punktspreizfunktion $p = p_m * p_s$, die mathematisch auch als Faltungskern bezeichnet wird, kodiert dabei die intrinsische Unschärfe des Kamerasystems $p_s$ sowie die Bewegung der Kamera $p_m$. Ein "größerer" Faltungskern führt zu einem unschärferen Bild, da mehr Details des Objekts zu einem Wert im resultierenden Bild verrechnet werden. Dies entspricht der Integration der Helligkeiten verschiedener Details des Objekts im selben Pixel des Kamerasensors, welche anschließend nicht mehr unterschieden werden können. Dadurch erscheinen Details unscharf.

Die Punktspreizfunktion des Kamerasystems $p_s$ ist typischerweise (zumindest annähernd) isometrisch und wie eine Gaußglocke geformt, d.h. der Einfluss benachbarter Pixel nimmt exponentiell ab. Im Gegensatz dazu ist die PSF der Kamerabewegung $p_m$ einzig durch den Bewegungspfad der Kamera während der Belichtungszeit definiert. Bei einer linearen Bewegung ergibt sich z.B. ein strichartiger Faltungskern. Der zusammengesetzte Faltungskern ergibt sich aus der Faltung der einzelnen Faltungskerne.

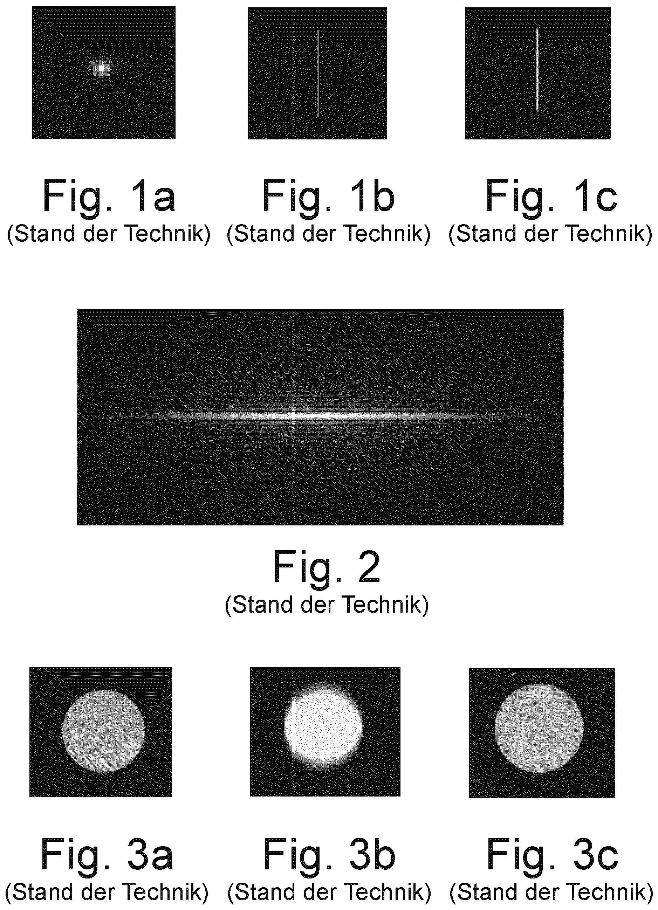

Die Figuren 1a, 1b und 1c zeigen einfache Beispiele für die Punktspreizfunktionen $p_s, p_m, p$ für den Fall einer vertikalen linearen Kamerabewegung.

Das Faltungstheorem bietet bei bekanntem Faltungskern einen einfachen Ansatz zur direkten Rekonstruktion des Objekts aus dem Kamerabild. Das Faltungstheorem besagt, dass die Faltungsoperation in eine (punktweise) Multiplikation der Spektren von Faltungskern und Objekt überführt werden kann:

$$\mathcal{F}(I) = \mathcal{F}(p) \cdot \mathcal{F}(o) \qquad (2)$$

Hierbei bezeichnet $\mathcal{F}$ die Fouriertransformation. Da diese invertierbar ist, ergibt sich folgende Rekonstruktions-formel:

$$o = \mathcal{F}^{-1}\left(\frac{\mathcal{F}(I)}{\mathcal{F}(p)}\right) \qquad (3)$$

Da das das Spektrum $\mathcal{F}(p)$ des Faltungskerns in Gleichung (3) im Nenner steht, führen darin enthaltene Nullstellen oder sehr kleine Werte zu undefinierten Quotienten oder Instabilitäten. Diese resultieren bei der Inversion der Fouriertransformation des Quotienten in deutlich sichtbaren Artefakten.

Eine andere Interpretation ergibt sich, wenn wir die Gleichung (2) betrachten und man sich vor Augen hält, dass Nullstellen im Spektrum $\mathcal{F}(p)$ der Punktspreizfunktion zu Nullstellen im Spektrum $\mathcal{F}(I)$ des Bildes führen, und zwar unabhängig von den entsprechenden Werten im Spektrum $\mathcal{F}(o)$ des eigentlichen Objekts. Die Nullstellen im Spektrum des Faltungskerns führen somit zu einem Informationsverlust.

Die in der Praxis auftretenden Spektren der Punktspreizfunktion haben häufig eine große Anzahl von Nullstellen insbesondere bei niedrigeren Frequenzen, was zu großflächigen und deutlich sichtbaren Artefakten führt, wenn man direkt gemäß der Gleichung (3) entfaltet. Die Figur 2 zeigt das logarithmische Spektrum der Punktspreizfunktion p aus der Figur 1c und die Figuren 3a bis 3c ein beispielhaftes Objekt, das Bild mit Bewegungsunschärfe bzw. das Ergebnis der direkten Entfaltung gemäß der Gleichung (3). Durch die Entfaltung wurde das Bild zwar geschärft, wie ein Vergleich der Figuren 3b und 3c zeigt, jedoch sind Artefakte hinzugekommen, die bei einer Messkamera nicht tolerierbar sind.

Zur Verringerung der Artefakte wurden verbesserte Entfaltungsmethoden vorgeschlagen, z.B. die Wiener-Entfaltung gemäß

$$o = \mathcal{F}^{-1}\left(\frac{s\mathcal{F}(p)^*}{s|\mathcal{F}(p)|^2 + n}\mathcal{F}(I)\right) \qquad (4)$$

Hierbei werden durch das Hinzufügen des Summanden $n$ im Nenner Nullstellen, bzw. sehr kleine Werte des Spektrums $\mathcal{F}(p)$ der Punktspreizfunktion, auf einen höheren Wert normalisiert, sodass die Fehlerverstärkung verringert wird.

Eine andere Herangehensweise stellt die Klasse der Entfaltungsmethoden mittels kleinster Fehlerquadrate dar:

$$o^* \in \arg\min_{o} ||p * o - I||_2^2 + \lambda R(o) \qquad (5)$$

Hierbei wird das Objekt durch Minimierung einer Kostenfunktion rekonstruiert. Diese besteht aus einem Datenterm

$$D(o) = ||p * o - I||_2^2 \,, \qquad (6)$$

der misst, wie gut das Objekt bei Faltung mit der bekannten Punktspreizfunktion mit dem aufgenommenen Bild, also mit dem Modell des Bildaufnahmeverfahrens, übereinstimmt. Die zweite Komponente ist der Regularisierer R, der zusätzlich erwünschte Eigenschaften des Objekts kodiert und damit die Rekonstruktion insbesondere dort dominiert, wo der Datenterm aufgrund fehlender Informationen keine eindeutige Rekonstruktion erlaubt. An Orten, wo beide Terme einen Beitrag liefern, bestimmt der Parameter $\lambda$ über die Gewichtung.

Eine in der modernen Bildverarbeitung im allgemeinen verbreitete Form der Regularisierung ist die sogenannte totale Variation (TV-Regularisierung)

$$R(o) = ||\nabla o||_1$$

welche die Absolutwerte aller Sprünge des Objekts misst. Hiermit zu regularisieren begünstigt glattere Objekte, wodurch anderweitig unbestimmte Bereiche in der Rekonstruktion möglichst plausibel durch vorhandene Nachbarwerte ersetzt werden.

Eine weitere Variante der Regularisierung besteht darin, den Datenterm durch Folgenden

$$D(o) = ||(p + \lambda \mathcal{F}^{-1}(I)) * o - I||_2^2$$

zu ersetzen. Durch die Linearität der Fouriertransformation ergibt sich effektiv eine Faltung

$$\left(p + \lambda \mathcal{F}^{-1}(I)\right) * o = \mathcal{F}\left(p + \lambda \mathcal{F}^{-1}(I)\right) \cdot \mathcal{F}(o) = \left(\mathcal{F}(p) + \lambda I\right) \cdot \mathcal{F}(o)$$

also eine ähnliche Form wie beim Wiener-Filter.

Die Lösung des Optimierungsproblems (5) kann iterativ berechnet werden.

Ist $R(o) = 0$ oder $R(o) = ||Ao||_2^2$ mit einem linearen Operator A, so handelt es sich um ein Problem der kleinsten Fehlerquadrate (*least-squares*), das effizient mit dem (vorkonditionierten) konjugierte Gradienten-Verfahren (*(preconditioned) conjugate gradient method*) oder mit vorkonditionierten Richardson-Iterationen (*preconditioned Richardson iterations*) gelöst werden kann.

Ist $R(o)$ eine differenzierbare oder konvexe (proximierbare) Funktion, so handelt es sich um ein konvexes Problem, das mit sogenannten Splittingverfahren, wie dem generalisierten Forwärts-rückwärts-Splitting (*forward backward splitting*) oder dem halb-quadratischen Splitting (*half quadratic splitting*) effizient gelöst werden kann.

Die Figur 4 zeigt das Ergebnis einer solchen verbesserten Entfaltung für das Beispielbild aus der Figur 3b. Die Regularisierung bewirkt eine deutliche Reduktion der Bildartefakte gegenüber der direkten Entfaltung. Es verbleiben jedoch andere für die jeweilige Regularisierung typische Artefakte wie Treppenstufen (TV-Regularisierung) oder unzureichende Bildschärfe (Wiener-Entfaltung).

2. Ablauf der Messung

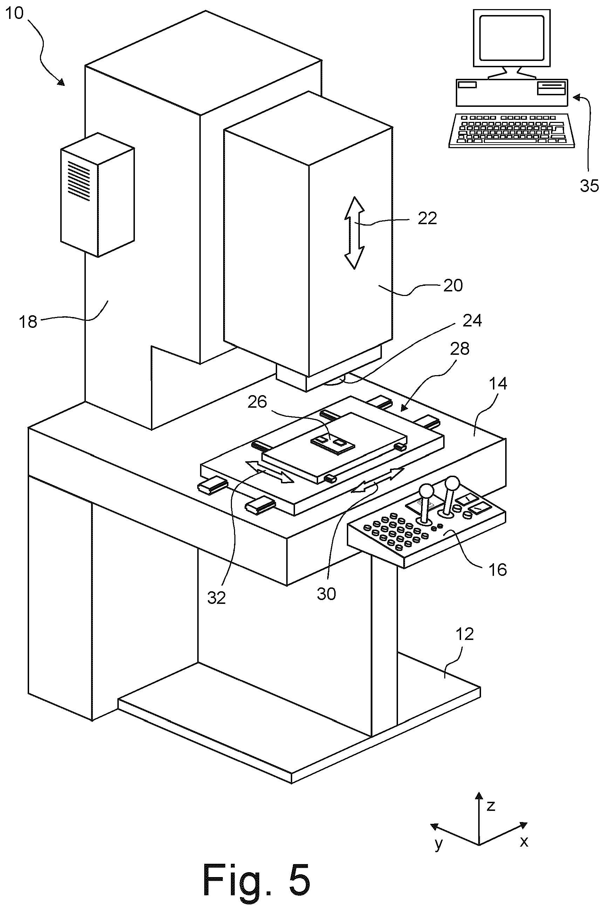

Die Figur 5 zeigt in einer schematischen perspektivischen Darstellung ein insgesamt mit 10 bezeichnetes Koordinatenmessgerät.

Das Koordinatenmessgerät 10 umfasst eine Basis 12, die einen Tisch 14 trägt, an dem ein Steuerpult 16 befestigt ist. Vom Tisch 14 ausgehend erstreckt sich nach oben ein Ständer 18, der eine Pinole 20 trägt. Wie ein Pfeil 22 andeutet, ist die Pinole 20 mit Hilfe eines nicht dargestellten Antriebs in vertikaler Richtung (z-Richtung) präzise verfahrbar.

An der Unterseite der Pinole 20 ist eine Messkamera 24 befestigt, mit der ein Bild von einem Werkstück 26 aufgenommen werden kann. Das Werkstück 26 ist auf einem Kreuztisch 28 befestigt, mit dem das Werkstück 26 in der horizontalen Ebene (x-Richtung und y-Richtung) präzise verfahren werden kann, wie dies in der Figur 1 durch Pfeile 30 bzw. 32 angedeutet ist. Auf diese Weise ist es möglich, auch größere Werkstücke 26 sukzessive mit Hilfe der Messkamera 24 zu vermessen, indem das Werkstück 26 mit Hilfe des Kreuztisches 28 nach und nach in das Messfeld der Messkamera 24 eingeführt wird. Die Bewegung des Kreuztisches kann z.B. mit Hilfe des Steuerpultes 16 vorgegeben und dabei gespeichert werden, so dass sie beliebig oft exakt für andere gleichartige Werkstücke 26 wiederholt werden kann.

Falls noch größere oder besonders schwere Werkstücke 26 vermessen werden sollen, kann das Koordinatenmessgerät 10 auch einen anderen mechanischen Aufbau haben und beispielsweise anstelle des Kreuztisches 28 ein bewegbares Portal aufweisen, an dem die Pinole 20 befestigt ist. Auf diese Weise lässt sich die Pinole 20 nicht nur entlang der z-Richtung, sondern auch entlang der x-Richtung und y-Richtung präzise verfahren, wie dies an sich im Stand der Technik bekannt ist. Das Werkstück 26 muss dann während der Messung nicht bewegt werden.

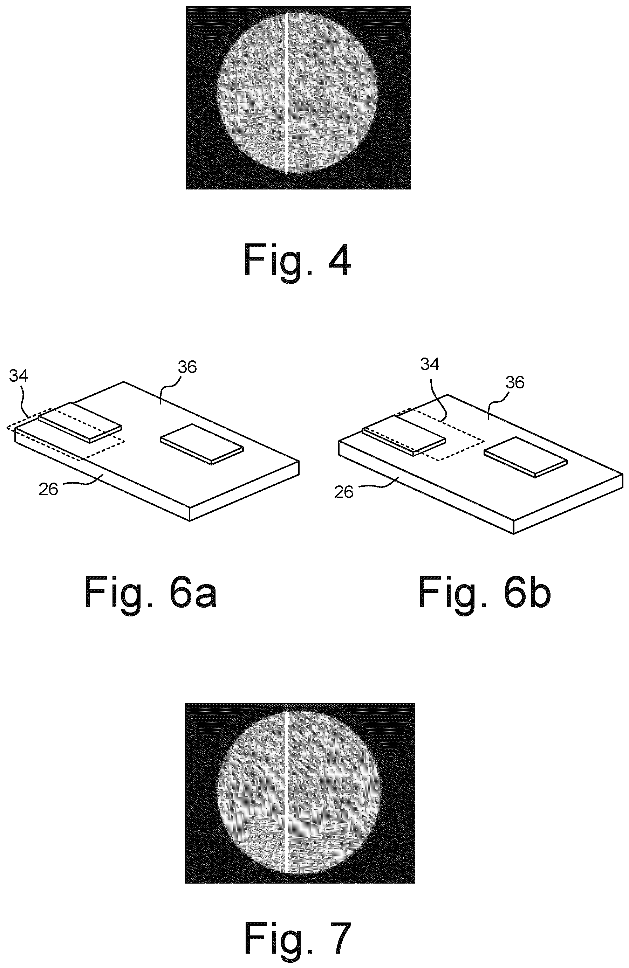

Die Figuren 6a und 6b illustrieren, wie das gesamte Werkstück 26 vermessen wird, wenn die zu vermessende Fläche größer ist als der gestrichelt angedeutete Bildausschnitt 34 der Messkamera 24. Die Pinole 20, an der die Messkamera 24 befestigt ist, wird hierzu relativ zu dem ruhenden Werkstück 26 verfahren, wodurch der Bildausschnitt 34 über die zu vermessende Oberfläche 36 des Werkstücks 26 wandert. Während dieser ununterbrochenen Relativbewegung zwischen der Messkamera 24 und der Oberfläche 36 des Werkstücks 26 werden mehrere Bilder der Oberfläche 36 aufgenommen, wobei jedes Bild einen anderen Ausschnitt der Oberfläche 36 zeigt. Die Bewegungsbahn der Pinole 20 kann dabei z.B. mäanderförmig sein und hängt von der Geometrie der Oberfläche 36 ab. Idealerweise wird die gesamte Bewegungsbahn ununterbrochen von der Pinole 20 abgefahren, da sich so die kürzeste Messzeit realisieren lässt.

3. Erste Variante - mehrere Einzelbilder

Bei einer ersten Variante werden von jedem Ausschnitt 34 der Oberfläche mindestens zwei Bilder aufgenommen. Zwischen den Aufnahmen der zwei oder mehr Bilder wird ein Aufnahmeparameter so verändert, dass sich die Faltungskerne bei den mindesten zwei Aufnahmen in wenigstens einer Nullstelle voneinander unterscheiden. Die zwei oder mehr Bilder sind aufgrund der Relativbewegung zwischen der Messkamera 24 und dem Werkstück 26 unscharf. Die Unschärfe wird von einer Auswerteeinrichtung 35 durch Entfaltung herausgerechnet.

Aufgrund der sich in der Lage der Nullstellen unterscheidenden Faltungskerne entsteht ein Informationsgewinn, mit dem sich die Entstehung von Artefakten verhindern lässt.

Bei der Mehrbildentfaltung wird ausgehend von der Gleichung (5) dem Datenterm eine Summe hinzugefügt:

$$o^* \in \arg\min_o \sum_{i=1}^n ||p_i * o - I_i||_2^2 + \lambda R(o) \qquad (7)$$

Wie erwähnt, werden die Bildaufnahmebedingungen bei den verschiedenen Messungen $I_1, \ldots, I_n$ variiert, was zu verschiedenen Faltungskernen $p_1, \ldots, p_n$ führt. Das Optimierungsproblem gemäß der Gleichung (7) hat noch immer dieselbe mathematische Struktur wie das in der Gleichung (5), da der Datenterm nach wie vor eine Summe von Fehlerquadraten ist. Somit kann es auch mit den im vorigen Abschnitt beschriebenen Methoden gelöst werden, um in der Praxis die Unschärfe aus den aufgenommenen Bildern zu entfernen.

Die Maximierung des Informationsgehalts bedeutet dabei zum einen, die Faltungskerne $p_1, \ldots, p_n$ möglichst so zu gestalten, dass sich die Bereiche ohne Nullstellen gegenseitig ergänzen und somit in der Summe der Faltungskerne möglichst wenig Nullstellen verbleiben. Zum anderen sollten möglichst wenige Nullstellen im Fourier-Spektrum der Punktspreizfunktion vorhanden sein, da jede Nullstelle einen Informationsverlust bedeutet.

Bei dem Aufnahmeparameter kann es sich z.B. um eine Geschwindigkeit oder Richtung der Bewegung der Pinole 20, die Belichtungszeit oder um die Intensität der Beleuchtung handeln.

Die Figur 7 zeigt das Ergebnis der Mehrbildentfaltung unter Ausnutzung von zwei verschiedenen Belichtungszeiten, deren resultierende PSF-Spektren sich gut ergänzen. Es ist eine deutliche Reduktion der Artefakte erkennbar, und zwar sowohl im Vergleich zur direkten Einzelbildentfaltung (vgl. Figur 3) als auch zu Einzelbildentfaltung mit zusätzlicher Regularisierung (vgl. Figur 4).

Um festzulegen, welcher Aufnahmeparameter wie verändert wird, kann eine Meritfunktion definiert werden, deren Wert mit Hilfe eines Optimierungsalgorithmus optimiert wird. Die Meritfunktion ist dabei vorzugsweise proportional zu einer Summe aus normierten Fourierspektren der Punktspreizfunktion, die von mehreren Aufnahmeparametern abhängt. Dadurch muss nicht durch Versuche oder Erfahrung festgelegt werden, wie die Aufnahmeparameter zwischen den Bildern variiert werden sollen. Dies wird nachfolgend näher erläutert.

Zunächst wird eine Meritfunktion als Maß für die gemeinsame Nullstellenmenge der PSF-Spektren definiert:

$$L(\theta_1, \ldots, \theta_n) = \sum_{i=1}^n ||\mathcal{F}(p_i(\theta_i))||_2^2$$

Hierbei steht $\theta_i$ für den Parametersatz, der die Modulation der PSF $p_i$ der i-ten Aufnahme beschreibt. $\theta_i$ kann also ein Vektor sein, der aus mehreren Parametern, wie Belichtungszeit, Bewegungsgeschwindigkeit und / oder -Richtung besteht. Es können aber auch komplexere Einstellungen in $\theta_i$ kodiert sein, wie eine nicht-lineare Bewegung der Kamera. Dies kann z.B. als parametrisierte Kurve, oder als diskretisierter Pfad erfolgen. Die Funktion $L(\theta_1, \ldots, \theta_n)$ misst hierbei die Gesamtintensität der Summe aller PSF-Spektren.

Die Idee ist nun, die optimalen Aufnahmeparameter wieder über ein Optimierungsproblem rechnerisch zu ermitteln:

$$\theta_1^*, \ldots, \theta_n^* = \arg\max_{\theta_1, \ldots, \theta_n} L(\theta_1, \ldots, \theta_n)$$

Die gewünschte Lösung kann mittels geeigneter Optimierungsverfahren bestimmt werden. Notwendig hierfür ist, dass die Abhängigkeit der Punktspreizfunktion PSF von den Parametern simuliert werden kann, d.h. dass $p_i(\theta_i)$ tatsächlich berechenbar ist. Das ist für die optischen Systeme moderner Messkameras 24 durchweg der Fall.

In der Regel sind die Zusammenhänge zwischen den Aufnahmeparametern und der Form der Punktspreizfunktion PSF durch ein einfaches analytisches Modell oder zumindest eine differenzierbare Simulation beschreibbar. In diesem Fall kann ein effizientes Gradientenabstiegsverfahren für die Ermittlung der optimalen Parameter genutzt werden.

4. Zweite Variante - mehrere Einzelbilder

Während bei der ersten Variante von jedem Ausschnitt der Oberfläche zwei oder mehr Bilder aufgenommen werden, wird bei einer zweiten Variante von jedem Ausschnitt der Oberfläche nur genau ein Bild aufgenommen. Dafür wird während der Aufnahme des genau einen Bildes mindestens ein Aufnahmeparameter so verändert, dass sich der Faltungskern während der Aufnahme in wenigstens einer Nullstelle verändert.

Dies kann z.B. dadurch realisiert werden, dass während der Belichtung die Intensität der Beleuchtung verändert wird oder die ohnehin bei der Messung vorhandene Relativbewegung zwischen der Messkamera 24 und dem Werkstück 26 genutzt wird. Die Erfindung manifestiert sich im letztgenannten Fall darin, dass die Relativbewegung zwar zu einer Unschärfe führt. Da jedoch die Relativbewegung - anders als bei der normalen Fotografie - genau hinsichtlich ihrer Richtung und Geschwindigkeit bekannt und durch die Steuerung der Pinole 20 vorgegeben ist, kann die dadurch verursachte Unschärfe des Bildes durch Berechnung der Faltungskerne wieder vollständig oder zumindest sehr weitgehend artefaktfrei herausgerechnet werden.

**Patentansprüche**

1. Verfahren zur berührungslosen Vermessung eines Objekts (26) mit Hilfe einer Messkamera (24), wobei das Verfahren durch folgende Schritte gekennzeichnet ist:

   a) es wird eine ununterbrochene Relativbewegung zwischen der Messkamera (24) und einer Oberfläche (36) des Objekts (26) erzeugt;
   b) während der Relativbewegung werden mehrere Bilder der Oberfläche (36) des Objekts (26) aufgenommen, wobei jedes Bild einen anderen Ausschnitt (34) der Oberfläche (36) zeigt;
   c) eine durch die Relativbewegung erzeugte Unschärfe der Bilder wird unter Anwendung eines Entfaltungsalgorithmus herausgerechnet, wobei unterschiedliche Faltungskerne verwendet werden, die sich in wenigstens einer Nullstelle voneinander unterscheiden.

2. Verfahren nach Anspruch 1, bei dem von jedem Ausschnitt der Oberfläche (36) mindestens zwei Bilder aufgenommen werden, wobei zwischen den Aufnahmen der mindestens zwei Bilder mindestens ein Aufnahmeparameter so verändert wird, dass sich die Faltungskerne bei den mindesten zwei Aufnahmen in wenigstens einer Nullstelle voneinander unterscheiden und sich die Punktspreizfunktion nicht-linear verändert.

3. Verfahren nach Anspruch 1, bei dem von jedem Ausschnitt der Oberfläche (36) genau ein Bild aufgenommen wird, wobei während der Aufnahme des genau einen Bildes mindestens ein Aufnahmeparameter so verändert wird, dass sich der Faltungskern während der Aufnahme in wenigstens einer Nullstelle verändert und sich die Punktspreizfunktion nicht-linear verändert.

4. Verfahren nach einem der Ansprüche 2 oder 3, bei dem der mindestens eine Aufnahmeparameter ausgewählt ist aus der Gruppe bestehend aus:

   - einer Geschwindigkeit der Relativbewegung,
   - eine Richtung der Relativbewegung;
   - einer Belichtungszeit;
   - einer Intensität der Beleuchtung.

5. Verfahren nach einem der Ansprüche 2 bis 4, bei dem zur Festlegung, welcher Aufnahmeparameter wie verändert wird, eine Meritfunktion definiert wird, deren Wert mit Hilfe eines Optimierungsalgorithmus optimiert wird.

6. Verfahren nach Anspruch 5, bei dem die Meritfunktion proportional zu einer Summe aus normierten Fourierspektren der Punktspreizfunktion ist, die von mehreren Aufnahmeparametern abhängt.

7. Vorrichtung (10) zur berührungslosen Vermessung eines Objekts (26), mit einer Verfahreinrichtung (20),

   einer Messkamera (24),
   **gekennzeichnet durch** eine Steuereinrichtung (16), die dazu eingerichtet ist, die Verfahreinrichtung (20) so zu steuern, dass die Messkamera (24) in einer ununterbrochenen Relativbewegung relativ zu einer Oberfläche (36) des Objekts (26) bewegt wird, wobei die Messkamera (24) während der Relativbewegung mehrere Bilder von der Oberfläche (36) des Objekts (26) aufnimmt, die jeweils einen anderen Ausschnitt der Oberfläche (36) zeigen, und mit einer Auswerteeinrichtung (35), die dazu eingerichtet ist, eine durch die Relativbewegung erzeugte Unschärfe der Bilder unter Anwendung eines Entfaltungsalgorithmus herauszurechnen, wobei unterschiedliche Faltungskerne verwendet werden, die sich in wenigstens einer Nullstelle voneinander unterscheiden.

8. Vorrichtung nach Anspruch 7, bei der die Steuereinrichtung (16) dazu eingerichtet ist, von jedem Ausschnitt (34) der Oberfläche (36) mindestens zwei Bilder aufzunehmen, wobei zwischen den Aufnahmen der mindestens zwei Bilder mindestens ein Aufnahmeparameter so verändert wird, dass sich die Faltungskerne bei den mindesten zwei Aufnahmen in wenigstens einer Nullstelle voneinander unterscheiden.

9. Vorrichtung nach Anspruch 7, bei der die Steuereinrichtung (16) dazu eingerichtet ist, von jedem Ausschnitt (34) der Oberfläche (36) genau ein Bild aufzunehmen, wobei während der Aufnahme des genau einen Bildes mindestens ein Aufnahmeparameter so verändert wird, dass sich der Faltungskern während der Aufnahme in wenigstens einer Nullstelle verändert.

**Claims**

1. Method for the non-contact measurement of an object (26) with the aid of a measuring camera (24), the method being **characterized by** the following steps:

    a) an uninterrupted relative motion between the measuring camera (24) and a surface (36) of the object (26) is produced;
    b) a plurality of images of the surface (36) of the object (26) are recorded during the relative motion, each image showing a different segment (34) of the surface (36);
    c) a blur of the images that is produced by the relative motion is computationally extracted by way of applying a deconvolution algorithm, use being made of different convolution kernels that differ from one another in at least one zero.

2. Method according to Claim 1, wherein at least two images of each segment of the surface (36) are recorded, between the recordings of the at least two images at least one recording parameter being changed such that the convolution kernels in the case of the at least two recordings differ from one another in at least one zero and the point spread function changes non-linearly.

3. Method according to Claim 1, wherein exactly one image of each segment of the surface (36) is recorded, during the recording of the exactly one image at least one recording parameter being changed such that the convolution kernel during the recording changes in at least one zero and the point spread function changes non-linearly.

4. Method according to either of Claims 2 and 3, wherein the at least one recording parameter is selected from the group consisting of:

    - a speed of the relative motion,
    - a direction of the relative motion;
    - an exposure time;
    - an intensity of the illumination.

5. Method according to any of Claims 2 to 4, wherein for the purpose of stipulating which recording parameter is changed and how, a merit function is defined, the value of which is optimized with the aid of an optimization algorithm.

6. Method according to Claim 5, wherein the merit function is proportional to a sum of normalized Fourier spectra of the point spread function, which is dependent on a plurality of recording parameters.

7. Apparatus (10) for the non-contact measurement of an object (26), comprising

    a displacement device (20),
    a measuring camera (24),

**EP 4 477 995 B1**

**characterized by** a control device (16) configured to control the displacement device (20) such that the measuring camera (24) is moved in an uninterrupted relative motion relative to a surface (36) of the object (26), the measuring camera (24) recording a plurality of images of the surface (36) of the object (26) during the relative motion, each of said images showing a different segment of the surface (36), and comprising an evaluation device (35) configured to computationally extract a blur of the images that is produced by the relative motion by way of applying a deconvolution algorithm, use being made of different convolution kernels that differ from one another in at least one zero.

8. Apparatus according to Claim 7, wherein the control device (16) is configured to record at least two images of each segment (34) of the surface (36), between the recordings of the at least two images at least one recording parameter being changed such that the convolution kernels in the case of the at least two recordings differ from one another in at least one zero.

9. Apparatus according to Claim 7, wherein the control device (16) is configured to record exactly one image of each segment (34) of the surface (36), during the recording of the exactly one image at least one recording parameter being changed such that the convolution kernel during the recording changes in at least one zero.

**Revendications**

1. Procédé pour la mesure sans contact d'un objet (26) à l'aide d'une caméra de mesure (24), le procédé étant **caractérisé par** les étapes suivantes :

   a) un mouvement relatif ininterrompu est généré entre la caméra de mesure (24) et une surface (36) de l'objet (26) ;
   b) pendant le mouvement relatif, plusieurs images de la surface (36) de l'objet (26) sont enregistrées, chaque image montrant une autre partie (34) de la surface (36) ;
   c) un flou des images généré par le mouvement relatif est calculé au moyen d'un algorithme de déconvolution, différents noyaux de convolution étant utilisés, qui se distinguent les uns des autres par au moins un point zéro.

2. Procédé selon la revendication 1, dans lequel au moins deux images sont enregistrées de chaque partie de la surface (36), au moins un paramètre d'enregistrement étant modifié entre les enregistrements desdites au moins deux images, de telle sorte que les noyaux de convolution dans lesdits au moins deux enregistrements diffèrent les uns des autres par au moins un point zéro et que la fonction de dispersion des points varie de manière non linéaire.

3. Procédé selon la revendication 1, dans lequel exactement une image est enregistrée de chaque partie de la surface (36), au moins un paramètre d'enregistrement étant modifié pendant l'enregistrement de ladite exactement une image de telle sorte que le noyau de convolution se modifie pendant l'enregistrement en au moins un point zéro et que la fonction de dispersion des points varie de manière non linéaire.

4. Procédé selon l'une des revendications 2 ou 3, dans lequel ledit au moins un paramètre d'enregistrement est choisi dans le groupe comprenant :

   - une vitesse du mouvement relatif,
   - une direction du mouvement relatif ;
   - un temps d'exposition ;
   - une intensité de l'éclairage.

5. Procédé selon l'une des revendications 2 à 4, dans lequel une fonction de mérite est définie pour déterminer quel paramètre d'enregistrement est à modifier et la manière de le faire, fonction de mérite dont la valeur est optimisée au moyen d'un algorithme d'optimisation.

6. Procédé selon la revendication 5, dans lequel la fonction de mérite est proportionnelle à la somme de spectres de Fourier normalisés de la fonction de dispersion des points, qui dépend de plusieurs paramètres d'enregistrement.

7. Dispositif (10) pour la mesure sans contact d'un objet (26), comprenant

   un dispositif mobile (20),

**10**

une caméra de mesure (24),

**caractérisé par** un dispositif de commande (16) qui est conçu pour commander le dispositif mobile (20) de telle sorte que la caméra de mesure (24) soit déplacée dans un mouvement relatif ininterrompu par rapport à une surface (36) de l'objet (26), la caméra de mesure (24) enregistrant, pendant le mouvement relatif, plusieurs images de la surface (36) de l'objet (26), chacune montrant une partie différente de la surface (36), et comprenant un dispositif d'évaluation (35) qui est conçu pour calculer un flou des images généré par le mouvement relatif en utilisant un algorithme de déconvolution, différents noyaux de convolution étant utilisés, qui diffèrent les uns des autres par au moins un point zéro.

8. Dispositif selon la revendication 7, dans lequel le dispositif de commande (16) est conçu pour enregistrer au moins deux images de chaque partie (34) de la surface (36), au moins un paramètre d'enregistrement étant modifié entre les enregistrements desdites au moins deux images de telle sorte que les noyaux de convolution desdites au moins deux enregistrements diffèrent les uns des autres par au moins un point zéro.

9. Dispositif selon la revendication 7, dans lequel le dispositif de commande (16) est conçu pour enregistrer exactement une image de chaque partie (34) de la surface (36), au moins un paramètre d'enregistrement étant modifié pendant l'enregistrement de ladite exactement une image de telle sorte que le noyau de convolution change d'au moins un point zéro pendant l'enregistrement.

## Fig. 1a
(Stand der Technik)

## Fig. 1b
(Stand der Technik)

## Fig. 1c
(Stand der Technik)

## Fig. 2
(Stand der Technik)

## Fig. 3a
(Stand der Technik)

## Fig. 3b
(Stand der Technik)

## Fig. 3c
(Stand der Technik)

Fig. 4

Fig. 6a

Fig. 6b

Fig. 7

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016202928 A1
- US 20170248768 A
- GB 9316307 A
- US 20060279639 A1
- US 20070009169 A1
- US 20090169080 A1
- DE 102012106584 B4
- DE 102015010214